# FASCICULE DE BREVET EUROPEEN

(11) **EP 1 066 762 B1**
(45) Date de publication et mention de la délivrance du brevet: **10.03.2004**
(21) Numéro de dépôt: 00401968.3
(22) Date de dépôt: 07.07.2000
(51) Int. Cl.: A23L 1/318, A22C 9/00, A23B 4/28, A23B 4/32

(54) **Procédé de traitement de produits alimentaires carnés**
Verfahren zur Behandlung von Fleischprodukten
Method for treating meat products

(30) Priorité: 07.07.1999 FR 9908776
(43) Date de publication de la demande: 10.01.2001
(73) Titulaire: Lutetia, 95400 Arnouville les Gonesse (FR)
(72) Inventeur: Frenot, Jean-Claude, 95400 Arnouville les Gonesse (FR); Longo, Philippe, 92190 Meudon (FR)
(74) Mandataire: Leszczynski, André

(56) Documents cités:
- EP-A- 0 600 565
- WO-A-92/18011
- GB-A- 2 085 742
- US-A- 4 265 918
- US-A- 4 517 888
- US-A- 4 836 099
- US-A- 5 514 030
- US-A- 5 603 567
- PATENT ABSTRACTS OF JAPAN vol. 1996, no. 02, 29 février 1996 (1996-02-29) -& JP 07 274814 A (MARUSHIN FOODS:KK), 24 octobre 1995 (1995-10-24)

## Description

La présente invention a pour objet un procédé et un dispositif de traitement de produits alimentaires carnés préparés par malaxage sous vide.

Par produits alimentaires carnés selon l'invention on entend essentiellement les produits de charcuterie cuits tels que le jambon supérieur ou le jambon sans phosphate, et les produits de charcuterie crus tels que par exemple la poitrine, le jambon sec, le magret ou les produits de charcuterie d'origine italienne connus sous les noms de coppa (à base d'échine) et pancetta (à base de poitrine), tous ces produits nécessitant au cours de leur fabrication une phase de malaxage effectuée de manière traditionnelle sous vide.

L'art antérieur WO 92/18011 divulgue un procédé de traitement de viande comprenant le malaxage de viande dans une cuve rotative après injection de solution saline durant lequel on applique des ultrasons en combinaison avec une alternance de pression entre vide et surpression. JP-07 274814 fait référence à un procédé pour la préparation d'aliments à base de boeuf comprenant le malaxage de boeuf à température réduite et sous vide pendant 0,5 à 1 heure, puis repos pour 10-12 hrs, puis cuisson du boeuf à 100°C pendant 2,5 à 3 heures. US-A-4 265 918 décrit une déshydratation partielle de denrées alimentaires, spécifiquement de lard, par réhydration, suivie d'une déhydratation sous vide pour réduire le contenu en eau sans affecter les autres constituants des denrées alimentaires.

Le procédé selon l'invention se caractérise essentiellement par le fait qu'après la phase de préparation par malaxage sous vide on soumet le produit à des étapes alternées de mise sous vide et de chauffage pendant une durée suffisante pour provoquer une déshydratation partielle du produit par évaporation d'une quantité de 5 à 10 % en poids d'eau contenue dans ledit produit après ladite phase de préparation.

Pour un produit carné cuit la phase de préparation est en général une phase d'injection de saumure et de malaxage sous vide continu habituellement de l'ordre de 20 à 50 mbar.

Pour un produit carné cru la phase de préparation est en général une phase de salage et malaxage sous vide. Le vide maintenu de manière régulée est habituellement de l'ordre de 500 à 50 mbar.

La mise en oeuvre du procédé de traitement selon l'invention permet de supprimer des traitements d'élaboration ultérieurs habituels, tels que les traitements de maturation et de séchage pour les produits camés crus qui nécessitent des appareillages différents. L'invention permet d'effectuer toutes les opérations dans un seul dispositif.

Selon l'invention le vide appliqué pendant la phase de déshydratation est plus poussé que le vide maintenu pendant la phase de préparation.

Avantageusement le vide appliqué pendant la phase de déshydratation est de 2 à 10 mbar, et de préférence d'environ 3 à 7 mbar.

Les étapes de chauffage suivant chacune une étape de déshydratation par application de vide s'effectuent de préférence à l'aide d'air chaud ou de vapeur et compensent les baisses de température liées à l'application de vide.

Les étapes de mise sous vide et de chauffage ont chacune une durée avantageusement comprise entre 30 minutes et une heure. Il peut être prévu une dernière étape de mise sous vide plus longue par exemple, de deux heures.

La durée de la phase de déshydratation partielle du procédé selon l'invention qui s'effectue sur un produit brut non tranché est, pour une tonne de produits traités, comprise entre 15 et 30 heures.

Aussi bien pour la phase de préparation du produit que pour la phase de déshydratation partielle selon l'invention de celui-ci on peut utiliser un dispositif comportant une cuve montée rotative autour d'un axe sensiblement horizontal munie d'une porte étanche à l'air pour le passage des produits à traiter, des moyens d'entraînement en rotation de la cuve et une pompe à vide multi-étage reliée à l'intérieur de la cuve par une canalisation externe, et des moyens pour introduire un fluide de chauffage tel que de la vapeur d'eau ou de l'air chaud.

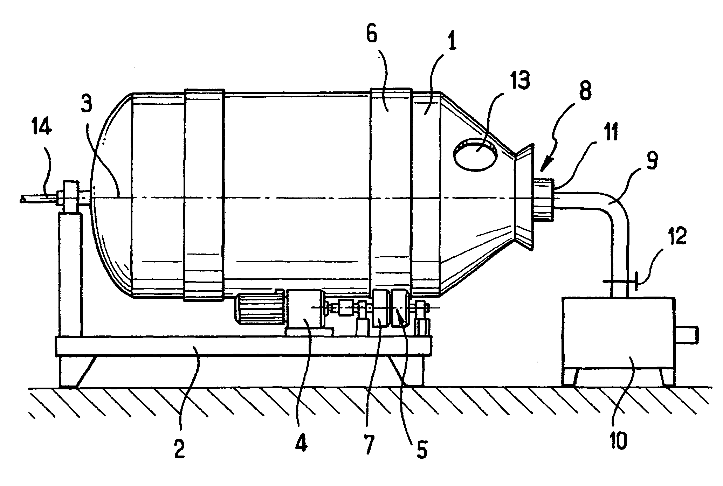

On a illustré sur la figure unique un exemple d'un tel dispositif.

Celui-ci comporte une cuve 1 montée sur un châssis 2 autour d'un axe de rotation sensiblement horizontal 3.

Pour entraîner cette cuve en rotation, le châssis 2 comporte un moteur 4 solidaire en rotation d'un organe d'entraînement 5.

La cuve comporte une zone de friction périphérique 6 qui coopère avec une roue de friction 7 de l'organe d'entraînement 5.

La partie avant de la cuve située à droite sur le dessin présente une forme tronconique convergente à l'extrémité de laquelle est située une porte étanche 8 qui permet l'introduction des produits à traiter dans la cuve 1.

Dans la partie centrale de la porte étanche pénètre une canalisation 9 de gros diamètre reliant l'intérieur de la cuve 1 à une pompe à vide multi-étage 10.

La canalisation 9 est pourvue d'un raccord tournant 11 qui permet la rotation de la cuve 1 autour de son axe 3 sans détérioration de la canalisation.

Une électrovanne 12 permet d'ouvrir et de fermer l'aspiration de la pompe à vide 10.

Cette électrovanne peut être commandée par un dispositif de commande électrique non représenté.

Sur sa partie avant tronconique la cuve comporte également un trou d'observation 13.

A l'arrière de la cuve une conduite 14 est montée sur un raccord tournant et permet d'introduire un fluide chaud à l'intérieur de la cuve.

On va maintenant décrire à titre d'exemples deux modes de mises en oeuvre du procédé de traitement selon l'invention, l'un pour un produit carné cuit, l'autre pour un produit carné cru.

### EXEMPLE 1 : PREPARATION DE JAMBON SUPERIEUR

On a introduit dans le dispositif illustré sur la figure unique une tonne de viande que l'on a traitée par injection de saumure à 10 / 12 % et on a effectué un malaxage pendant 15 heures à une température de 4° C sous un vide continu de 50 mbar.

Une fois terminée, la phase de malaxage au cours de laquelle le produit a subi environ 2 000 retombées on augmente la valeur du vide appliqué à environ 5 mbar et on le maintient pendant une durée de 30 minutes après quoi, on introduit de l'air chaud pendant une heure. On repète ces alternances de mises sous vide et de chauffage le cas échéant en modifiant leurs durées respectives en fonction des exigences de température du produit pendant une durée de 28 heures. La température en fin de procédé est d'environ -2°C.

Cette phase d'application de vide a permis une déshydratation partielle d'environ 7 %.

Les morceaux de viande sont ensuite mis en place dans des conditionnements individuels et cuits sous vide de manière traditionnelle en étant maintenus dans leur emballage.

On constate que la mise en oeuvre de l'étape de déshydratation partielle selon l'invention réduit sensiblement l'eau libre restant dans le produit final et assure une meilleure liaison de l'eau sur la protéine de viande ainsi qu'un taux de protéine accru sur le produit final.

La phase de déshydratation partielle selon l'invention permet de limiter le rejet d'eau après cuisson de telle sorte que le jambon peut rester dans l'emballage de cuisson ce qui permet un gain de temps, un gain de manutention et un meilleur contrôle de la qualité bactériologique.

On constate également que le produit final peut se conserver plus longtemps ce qui permet de lui attribuer une durée limite de vente supérieure.

### EXEMPLE 2. PREPARATION DE POITRINE

Après avoir introduit une tonne de poitrine de porc dans le dispositif tel qu'illustré dans la figure unique on procède à un salage et à un malaxage pendant une durée de l'ordre de 12 heures à une température de 4° C et en appliquant un vide régulé de 500 à 50 mbar.

Au cours de cette phase de salage et malaxage le produit subit environ 750 retombées.

On met en oeuvre ensuite la phase de déshydratation partielle selon l'invention en appliquant des alternances d'application d'un vide de 7 mbar et de chauffage pendant une durée d'environ 28 heures provoquant une évaporation d'environ 7 % de l'eau contenue dans le produit en fin de malaxage.

Le produit est ensuite prêt à être tranché sans nécessiter de phases d'étuvage et de séchage.

De manière remarquable le procédé selon l'invention permet une commercialisation plus rapide de produits ayant des caractéristiques d'apparence et de propriétés organoleptiques au moins aussi bonnes que les produits traditionnels.

On constate que la mise en oeuvre du procédé selon l'invention permet de fixer une partie de l'eau libre sur la protéine de viande.

Ainsi des mesures de taux d'eau libre (Aw) sont de 0,950 pour de la poitrine préparée traditionnellement sans phase de déshydratation partielle selon l'invention et de 0,900 pour de la poitrine préparée comme décrit ci-dessus.

On constate sur le produit final une meilleure stabilité dans le temps, une couleur très attrayante, une viande ferme et comme pour les produits cuits une meilleure conservation liée à une dessiccation plus lente du produit fini permettant d'accroître la durée limite de vente maximale.

## Revendications

1. Procédé de traitement de produits alimentaires carnés préparés par malaxage sous vide, **caractérisé par le fait qu'**après la phase de préparation par malaxage sous vide on soumet le produit à des étapes alternées de mise sous vide et de chauffage pendant une durée suffisante pour provoquer une déshydratation partielle du produit par évaporation d'une quantité de 5 à 10 % en poids d'eau contenue dans ledit produit après ladite phase de préparation.

2. Procédé selon la revendication 1, **caractérisé par le fait que** le vide appliqué par alternances pendant la phase de déshydratation est plus poussé que le vide maintenu pendant la phase de préparation.

3. Procédé selon l'une quelconque des revendications 1 et 2, **caractérisé par le fait que** le vide appliqué par alternances pendant la phase de déshydratation est de 2 à 10 mbar, et de préférence d'environ 3 à 7 mbar.

4. Procédé selon l'une quelconque des revendications précédentes, **caractérisé par le fait que** le chauffage pendant la phase de déshydratation s'effectue par air chaud ou vapeur d'eau.

5. Procédé selon l'une quelconque des revendications précédentes, **caractérisé par le fait que** les étapes alternées de mise sous vide et de chauffage pendant la phase de déshydratation ont une durée comprise chacune entre 30 minutes et une heure.

6. Procédé selon l'une quelconque des revendications précédentes, **caractérisé par le fait que** la dernière étape de la phase de déshydratation est une étape de mise sous vide.

7. Procédé selon la revendication 6, **caractérisé par le fait que** la durée de la dernière étape de mise sous vide est plus longue que la durée des étapes précédentes.

8. Procédé selon la revendication 7, **caractérisé par le fait que** la dernière étape de mise sous vide a une durée de deux heures.

9. Procédé selon l'une quelconque des revendications précédentes, **caractérisé par le fait que** la durée de la phase de déshydratation partielle est, pour une tonne de produits traités, comprise entre 15 et 30 heures.

10. Procédé selon l'une quelconque des revendications précédentes **caractérisé par** l'utilisation d'un dispositif comportant une cuve (1) montée rotative autour d'un axe sensiblement horizontal (3), munie d'une porte (8) étanche à l'air pour le passage des produits à traiter, des moyens (4, 5, 6, 7) d'entraînement en rotation de la cuve, une pompe à vide multi-étage (10) reliée à l'intérieur de la cuve par une canalisation externe (9) et des moyens (14) pour introduire un fluide de chauffage dans la cuve.

## Patentansprüche

1. Verfahren zur Behandlung von durch Vakuumkneten vorbereiteten Fleischprodukten, **dadurch gekennzeichnet, dass** nach der Vorbereitungsphase durch Vakuumkneten das Produkt in abwechselnden Schritten vakuumiert und erhitzt wird, wobei diese abwechselnden Schritte für eine ausreichende Dauer durchgeführt werden, um das Produkt durch Verdampfung von 5 bis 10 % der in diesem Produkt nach der oben genannten Vorbereitungsphase enthaltenen Wassermasse teilweise zu dehydratisieren.

2. Verfahren nach Anspruch 1, **dadurch gekennzeichnet, dass** das Vakuum, das während der Dehydratationsphase abwechselnd angewandt wird, stärker ist, als das Vakuum, das in der Vorbereitungsphase zum Einsatz kommt.

3. Verfahren nach Anspruch 1 oder 2, **dadurch gekennzeichnet, dass** das Vakuum, das während der Dehydratationsphase abwechselnd angewandt wird, zwischen 2 und 10 mbar, und vorzugsweise zwischen 3 und 7 mbar liegt.

4. Verfahren nach einem der vorstehenden Ansprüche, **dadurch gekennzeichnet, dass** die Erhitzung während der Dehydratationsphase durch Warmluft oder Wasserdampf bewirkt wird.

5. Verfahren nach einem der vorstehenden Ansprüche, **dadurch gekennzeichnet, dass** die abwechselnden Schritte der Vakuumierung und Erhitzung während der Dehydratationsphase eine jeweilige Dauer von 30 Minuten bis eine Stunde haben.

6. Verfahren nach einem der vorstehenden Ansprüche, **dadurch gekennzeichnet, dass** der letzte Schritt der Dehydratationsphase eine Vakuumphase ist.

7. Verfahren nach Anspruch 6, **dadurch gekennzeichnet, dass** die Dauer der letzten Vakuumphase länger ist als die Dauer der vorangegangenen Phasen.

8. Verfahren nach Anspruch 7, **dadurch gekennzeichnet, dass** die Dauer der letzten Vakuumphase zwei Stunden beträgt.

9. Verfahren nach einem der vorstehenden Ansprüche, **dadurch gekennzeichnet, dass** die Dauer der Phase der teilweisen Dehydratation für eine Tonne behandelter Produkte zwischen 15 und 30 Stunden beträgt.

10. Verfahren nach einem der vorstehenden Ansprüche, **dadurch gekennzeichnet, dass** eine Vorrichtung zum Einsatz kommt, welche einen Tank (1) umfasst, der so montiert ist, dass er sich um eine etwa waagerechte Achse (3) dreht, wobei an diesem Tank eine luftdichte Tür (8) für das Einfüllen der zu behandelnden Produkte vorgesehen ist, sowie Antriebsmittel zur Rotation des Tanks (4, 5, 6, 7), sowie eine über eine äußere Rohrleitung mit dem Inneren des Behälters verbundene mehrstufige Vakuumpumpe (10), sowie Mittel (14) zum Einführen einer Erhitzungsflüssigkeit in den Tank.

## Claims

1. Method for processing meat-based foodstuffs prepared by vacuum blending, **characterised in that** after the phase of preparation by vacuum blending, the product is subjected to alternate stages of exposure to vacuum and heating for a sufficient period to cause partial dehydration of the product by evaporation of a quantity of 5 to 10% weight of water contained in said product after said preparation phase.

2. Method according to claim 1, **characterised in that** the vacuum applied alternately during the dehydration phase is greater than the vacuum maintained during the preparation phase.

3. Method according to one of claims 1 and 2, **characterised in that** the vacuum applied alternately during the dehydration phase is between 2 and 10 mbar, preferably around 3 to 7 mbar.

4. Method according to any of the previous claims, **characterised in that** the heating during the dehydration phase is performed by hot air or water vapour.

5. Method according to any of the previous claims, **characterised in that** the alternating stages of vacuum application and heating during the dehydration phase each have a duration of between 30 minutes and one hour.

6. Method according to any of the previous claims, **characterised in that** the final stage of the dehydration phase is a stage of vacuum application.

7. Method according to claim 6, **characterised in that** the duration of the final phase of vacuum application is longer than the duration of the preceding phases.

8. Method according to claim 7, **characterised in that** the final stage of vacuum application has a duration of two hours.

9. Method according to any of the previous claims, **characterised in that** the duration of the partial dehydration phase, for one tonne of product processed, is between 15 and 30 hours.

10. Method according to any of the previous claims, **characterised by** the use of a device comprising a vessel (1) mounted to rotate about an approximately horizontal axis (3) and fitted with an airtight door (8) for the passage of the products to be processed, means (4, 5, 6, 7) for driving the vessel in rotation, a multistage vacuum pump (10) linked to the inside of the vessel by an external pipeline (9), and means (14) for introducing a heating fluid into the vessel.
